(19) Europäisches Patentamt
European Patent Office
Office européen des brevets

(11) Veröffentlichungsnummer: **0 055 695**
**A1**

(12) # EUROPÄISCHE PATENTANMELDUNG

(21) Anmeldenummer: **81810514.0**

(22) Anmeldetag: **22.12.81**

(51) Int. Cl.³: **C 07 F 9/38**

(30) Priorität: **30.12.80 US 221224**

(43) Veröffentlichungstag der Anmeldung: **07.07.82 Patentblatt 82/27**

(84) Benannte Vertragsstaaten: **AT BE CH DE FR GB IT LI LU SE**

(71) Anmelder: **CIBA-GEIGY AG**
**Patentabteilung Postfach**
**CH-4002 Basel(CH)**

(72) Erfinder: **Maier, Ludwig, Dr.**
**Im Lee 28**
**CH-4144 Arlesheim(CH)**

(54) **Verfahren zur Herstellung von N-phosphonomethylglycin.**

(57) Es wird ein verbessertes Verfahren zur Herstellung von N-Phosphonomethylglycin beschrieben. Bei diesem Verfahren wird ein am Stickstoff durch einen hydrogenolytisch abspaltbaren Rest substituiertes Glycin in einem wässrigen sauren Reaktionsmedium mit Formaldehyd und phosphoriger Säure zunächst zu einem entsprechenden N-substituierten N-Phosphonomethylglycin umgesetzt, aus welchem dann der ursprünglich am Stickstoff vorhandene Substituent hydrogenolytisch abgespalten wird.

N-Phosphonomethylglycin ist ein herbizider Wirkstoff mit einem breiten Wirkungsspektrum, das nur wenig oder gar keine Resteffekte aufweist.

EP 0 055 695 A1

Croydon Printing Company Ltd.

CIBA-GEIGY AG
Basel (Schweiz)

5- 13239/=

Verfahren zur Herstellung von N-Phosphonomethylglycin

Die vorliegende Erfindung betrifft ein verbessertes Verfahren zur Herstellung von N-Phosphonomethylglycin der Formel I

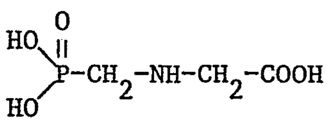

(I)

durch Umsetzung eines N-substituierten Glycins mit Formaldehyd und phosphoriger Säure zum entsprechenden N-substituierten N-Phosphonomethylglycin und anschliessende Abspaltung des ursprünglich vorhandenen Substituenten am Stickstoff.

N-Phosphonomethylglycin ist ein Herbizid mit einem breiten Spektrum, das nur wenig oder gar keine Resteffekte aufweist. Seine Herstellung und Verwendung ist in der belgischen Patentschrift 774.349 beschrieben.

Es ist bekannt, dass bei der Umsetzung von Glycin, Formaldehyd und phosphoriger Säure im Molverhältnis 1:1:1 anstelle des gewünschten N-Phosphonomethylglycins in der Hauptsache N,N-Bis-Phosphonomethylglycin gebildet wird (vgl. DE-OS 23 37 289). Dieses Produkt lässt sich dann durch Oxydation (US-PS 3,969,398) oder elektrolytisch (DE-OS 23 63 634) in Phosphonomethylglycin überführen.

Um die mit dem vorgenannten Verfahren verbundenen Schwierigkeiten zu überwinden, wurde auch bereits vorgeschlagen, N-Phosphomethylglycin in der Weise herzustellen, dass man zunächst ein N-substituiertes Glycin mit Formaldehyd und phosphoriger Säure zum entsprechenden

N-substituierten N-Phosphonomethylglycin umsetzte und aus diesem dann anschliessend den ursprünglich vorhandenen Substituenten am Stickstoff abspaltete. So wird beispielsweise in der DE-OS 23 37 289 die Herstellung von N-Phosphonomethylglycin durch Umsetzung von N-Benzyläthylglycinat mit Formaldehyd und phosphoriger Säure unter gleichzeitiger Hydrolyse der Estergruppe zu N-Benzyl-N-phosphonomethylglycin und anschliessende Abspaltung der Benzylgruppe als Benzylbromid mit starker Bromwasserstoffsäure beschrieben. Auf diese Weise wird N-Phosphonomethylglycin in einer Ausbeute von etwa 40% erhalten. Dieses Verfahren ist wegen der niedrigen Ausbeute und im Hinblick auf die lacrimatorische Wirkung des als Nebenprodukt gebildeten Benzylbromids für eine technische Herstellung von N-Phosphonomethylglycin nicht vorteilhaft.

Es ist daher das Ziel der vorliegenden Erfindung, ein Verfahren bereitzustellen, durch das N-Phosphonomethylglycin in guter Ausbeute und unter Bildung leicht zu handhabender umweltfreundlicher Nebenprodukte hergestellt werden kann.

Erfindungsgemäss wird vorgeschlagen, N-Phosphonomethylglycin in der Weise herzustellen, dass man ein N-substituiertes Glycin der Formel II

$$R\text{-}NH\text{-}CH_2\text{-}COOH \qquad (II),$$

in welcher R einen hydrogenolytisch abspaltbaren Rest darstellt, in einem wässrigen sauren Reaktionsmedium mit Formaldehyd und phosphoriger Säure zu einem N-substituierten N-Phosphonomethylglycin der Formel III

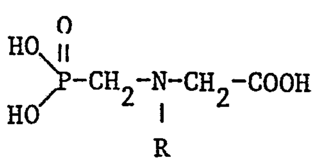

(III),

in welcher R die oben angegebene Bedeutung hat, umsetzt und anschliessend den Rest R hydrogenolytisch abspaltet.

Bei der Umsetzung des N-substituierten Glycins der Formel II mit Formaldehyd und phosphoriger Säure wird als wässriges, saures Reaktionsmedium zweckmässig eine nicht oxydierende wässrige Mineralsäure, wie Salzsäure, Bromwasserstoffsäure, Jodwasserstoffsäure, Schwefelsäure und Phosphorsäure, verwendet. Unter den vorgenannten Mineralsäuren sind die Halogenwasserstoffsäuren wegen ihrer Flüchtigkeit besonders vorteilhaft zu verwenden. Ein besonders bevorzugtes wässriges saures Reaktionsmedium ist wässrige Salzsäure.

Die Umsetzung eines N-substituierten Glycins der Formel II mit Formaldehyd und phosphoriger Säure wird bei erhöhten Temperaturen, vorteilhaft bei 70-120°C, durchgeführt. Vorzugsweise wird eine Reaktionstemperatur im Bereich von 90°C bis Rückflusstemperatur des Reaktionsmediums verwendet.

Der für die Reaktion benötigte Formaldehyd kann als 3o-40%ige wässrige Lösung oder als Paraformaldehyd eingesetzt werden. Es wird im wesentlichen die äquivalente Menge oder ein Ueberschuss von bis zu 300 % verwendet. Nach beendigter Umsetzung kann das Reaktionsprodukt durch Eindampfen des Reaktionsgemisches und Kristallisation des Rückstandes aus Wasser gewonnen werden. Man kann jedoch auch auf eine Isolierung des N-substituierten N-Phosphonomethylglycins der Formel III verzichten und die Reaktionslösung entweder unmittelbar oder nach Entfernung eines Teils des Wassers für die nachfolgende hydrogenolytische Abspaltung des Restes R verwenden.

Der Rest R kann grundsätzlich jeden beliebigen hydrogenolytisch abspaltbaren Rest darstellen. Als Beispiele für hydrogenolytisch abspaltbare Reste R seien 1-Arylalkylgruppen, wie Benzyl, 1-Phenyläthyl, 1-Phenylpropyl, Naphthylmethyl, 1-Naphthyläthyl, oder 1-Naphthylpropyl genannt. Ferner kann R die entsprechenden 1,1-Diarylalkylgruppen, insbesondere die Diphenylmethylgruppe, sowie die

Triphenylmethylgruppe (Trityl) darstellen, wobei die in den vorgenannten Gruppen vorkommenden Arylreste übliche, gegen katalytisch erregten Wasserstoff inerte Substituenten tragen können.

Die Debenzylierung wird vorteilhaft ebenfalls in wässrigem Medium bei Raumtemperatur oder mässig erhöhter Temperatur bei Normaldruck oder erhöhtem Druck durchgeführt. Als Katalysatoren können die üblichen, für die hydrogenolytische Abspaltung der vorgenannten Reste geeigneten Katalysatoren verwendet werden. Geeignete Katalysatoren sind beispielsweise Palladium, Platin oder Raney-Nickel. Diese Katalysatoren können mit oder ohne einen inerten Träger verwendet werden. Es ist auch möglich, die vorgenannten Metalle, insbesondere Palladium und Platin, aus ihren Salzen oder Oxyden durch Behandeln mit Wasserstoff freizusetzen. Für die erfindungsgemässe Debenzylierung sind insbesondere Palladium-Katalysatoren, wie Palladium auf Kohle oder Palladium auf Bariumsulfat geeignet. Nach beendigter Debenzylierung wird der Katalysator durch Filtration abgetrennt und das Filtrat zur Trockene eingedampft. Man erhält auf diese Weise praktisch reines N-Phosphonomethylglycin.

Durch das erfindungsgemässe Verfahren wird es möglich, N-Phosphonomethylglycin in sehr guter Ausbeute herzustellen. Die mit dem erfindungsgemässen Verfahren erzielbare Verbesserung der Ausbeute beruht einerseits auf der Verwendung von unverestertem N-substituiertem Glycin und andererseits auf der Abspaltung des Restes R durch Hydrogenolyse. Ferner wird durch die hydrogenolytische Abspaltung des Restes R als Nebenprodukt ein araliphatischer Kohlenwasserstoff erhalten, der sich ohne Schwierigkeiten aus dem wässrigen Reaktionsgemisch abtrennen lässt.

Das erfindungsgemässe Verfahren wird durch das folgende Beispiel näher erläutert.

Beispiel:

a) Herstellung von N-Benzyl-N-phosphonomethylglycin

In einem mit Rührer und Rückflusskühler versehenen Reaktionsgefäss werden 101,0 g (0,5 Mol) N-Benzylglycinhydrochlorid und 41,0 g phosphorige Säure in 500 ml konz.Salzsäure und 100 ml Wasser gelöst. Dann wird auf Rückflusstemperatur erhitzt und unter Rühren während 30 Minuten 160 ml 35%ige wässrige Formaldehydlösung zugetropft und 4 Stunden bei Rückflusstemperatur nachgerührt. Danach wird die trübe Lösung filtriert und am Rotationsverdampfer zur Trockene eingedampft. Der harzige Rückstand (149 g) wird aus 1000 ml Wasser kristallisiert. Es werden 93,5 g N-Benzyl-N-phosphonomethylglycin vom Schmelzpunkt 203-206°C (Zers.) erhalten. Aus dem Filtrat werden durch Eindampfen im Vakuum und Kristallisation des harzigen Rückstandes aus Wasser weitere 23,3 g N-Benzyl-N-phosphonomethylglycin erhalten. Die Gesamtausbeute beträgt somit 116,8 g (90,1% der Theorie).

b) Herstellung von N-Phosphonomethylglycin

In einem Hydrierungsgefäss (Schüttelbirne) wird eine Lösung von 51,8 g (0,2 Mol) N-Benzyl-N-Phosnonomethylglycin in 500 ml Wasser nach Zugabe von 5,0 g Palladium-auf-Kohle (5%ig) bei Raumtemperatur mit Wasserstoff behandelt. Es werden während 45 Stunden 4,89 l (109% der Theorie) Wasserstoff aufgenommen. Der Katalysator wird abfiltriert und zweimal mit je 500 ml Wasser ausgekocht. Durch Eindampfen der vereinigten Filtrate im Vakuum werden 33,5 g (99% der Theorie) N-Phosphonomethylglycin als weisses Pulver vom Schmelzpunkt 309-312°C (Zers.) erhalten.

Patentansprüche

1. Verfahren zur Herstellung von N-Phosphonomethylglycin der Formel I

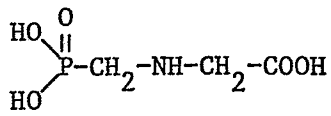

(I)

durch Umsetzung eines N-substituierten Glycins mit Formaldehyd und phosphoriger Säure zum entsprechenden N-substituierten N-Phosphonomethylglycin und anschliessende Abspaltung des ursprünglich vorhandenen Substituenten am Stickstoff, dadurch gekennzeichnet, dass man ein N-substituiertes Glycin der Formel II

$$R-NH-CH_2-COOH \qquad (II),$$

in welcher R einen hydrogenolytisch abspaltbaren Rest darstellt, in einem wässrigen sauren Reaktionsmedium mit Formaldehyd und phosphoriger Säure zu einem N-substituierten N-Phosphonomethylglycin der Formel III

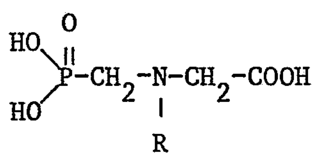

(III) ,

in welcher R die oben angegebene Bedeutung hat, umsetzt und anschliessend den Rest R hydrogenolytisch abspaltet.

2. Verfahren nach Anspruch 1, dadurch gekennzeichnet, dass man ein N-substituiertes Glycin der Formel II verwendet, in welcher eine 1-Arylalkylgruppe, eine 1,1-Diarylalkylgruppe oder die Triphenylmethylgruppe darstellt.

3. Verfahren nach Anspruch 1, dadurch gekennzeichnet, dass man ein N-substituiertes Glycin der Formel II verwendet, in welcher R die Benzylgruppe, die Diphenylmethylgruppe oder die Triphenylmethylgruppe bedeutet.

4. Verfahren nach Anspruch 1, dadurch gekennzeichnet, dass man ein N-substituiertes Glycin der Formel II verwendet, in welcher R die Benzylgruppe bedeutet.

5. Verfahren nach Anspruch 1, dadurch gekennzeichnet, dass man die Umsetzung eines N-substituierten Glycins der Formel II mit Formaldehyd und phosphoriger Säure bei 70-120°C durchführt.

6. Verfahren nach Anspruch 1, dadurch gekennzeichnet, dass man die Umsetzung eines N-substituierten Glycins der Formel II mit Formaldehyd und phosphoriger Säure bei einer Temperatur im Bereich von 90°C bis Rückflusstemperatur des Reaktionsmediums durchführt.

7. Verfahren nach Anspruch 1, dadurch gekennzeichnet, dass man die Debenzylierung in einem wässrigen Reaktionsmedium mit Palladium, Platin oder Raney-Nickel als Katalysator durchführt.

8. Verfahren nach Anspruch 1, dadurch gekennzeichnet, dass man für die Debenzylierung Palladium als Katalysator verwendet.

0055695

Europäisches Patentamt

# EUROPÄISCHER RECHERCHENBERICHT

Nummer der Anmeldung
EP 81 81 0514

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DY | DE - A - 2 337 289 (I.C.I.)<br>* Insgesamt * | 1-8 |
| Y | US - A - 3 927 080 (VAN R. GAERTNER)<br>* Insgesamt * | 1-8 |
| Y | FR - A - 1 319 140 (F. HOFFMAN - LA ROCHE)<br>* Beispielen Ic, 2c, 3c; Zusammenfassung * | 1-8 |

KLASSIFIKATION DER ANMELDUNG (Int Cl.3)

C 07 F 9/38

RECHERCHIERTE SACHGEBIETE (Int. Cl.3)

C 07 F 9/00
C 07 C 101/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 25-03-1982 | BESLIER |